# EUROPEAN PATENT SPECIFICATION

(11) **EP 1 038 414 B1**
(45) Date of publication and mention of the grant of the patent: **03.05.2006**
(21) Application number: 98952787.4
(22) Date of filing: 10.11.1998
(51) Int. Cl.: H04Q 11/04, H04L 12/56

(54) **A FRAME DISCARD MECHANISM FOR PACKET SWITCHES**
RAHMEN-WEGWERFMECHANISMUS FÜR PAKETVERMITTLUNGEN
MECANISME D'ABANDON DE TRAMES DESTINE AUX COMMUTATEURS PAR PAQUETS

(30) Priority: 12.11.1997 FI 974216
(43) Date of publication of application: 27.09.2000
(73) Proprietor: Nokia Corporation, 02150 Espoo (FI)
(72) Inventor: MA, Jian, FIN-02940 Espoo (FI)
(74) Representative: Ruuskanen, Juha-Pekka
(86) International application number: PCT/FI1998/000872
(87) International publication number: WO 1999/025147

(56) References cited:
- EP-A2- 0 323 835
- US-A- 4 754 451
- US-A- 4 760 570
- US-A- 5 764 641
- IEEE JOURNAL ON SELECTED AREAS IN COMMUNICATIONS, Volume 13, No. 4, May 1995, ALLYN ROMANOW, "Dynamics of TCP Traffic over ATM Networks", pages 636-637.

## Description

### Field of the invention

This invention relates generally to a packet discard mechanism for packet switches. More particularly, the invention relates to a packet discard mechanism which discards whole frames instead of randomly discarding individual packets (or cells).

### Background of the invention

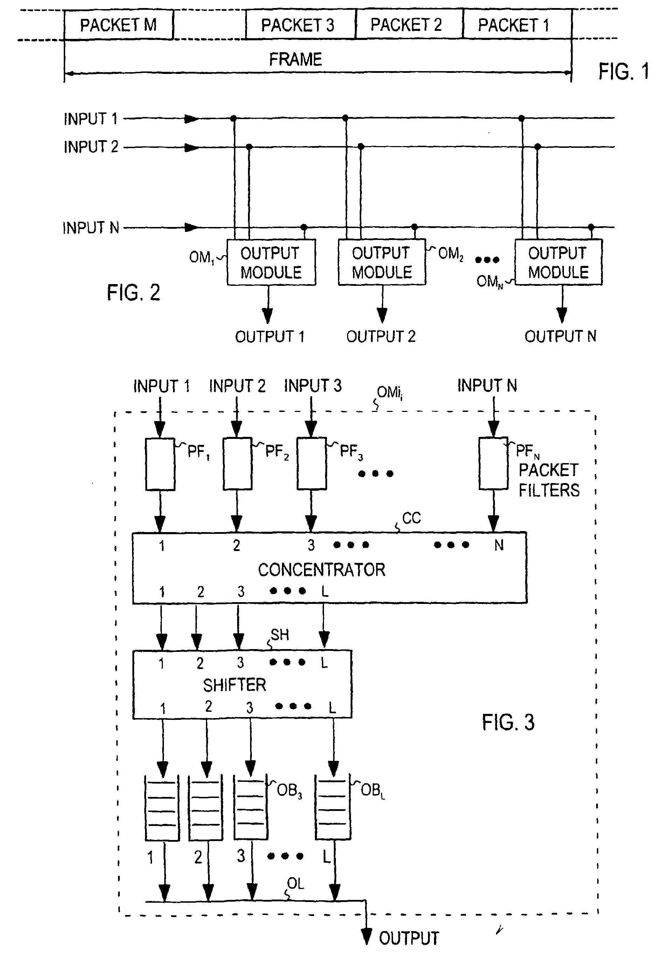

In a packet switched network, most of the higher level data units to be delivered through the switches of the network are too large to be transferred in a single packet and must therefore be segmented for delivery. In this context, these higher level data units, which are used in various kinds of applications, are called frames. Figure 1 illustrates the relationship between packets and frames as used in this context; a transmission frame consists of M consecutive packets, each having a fixed length. In a TCP/IP over ATM network, for example, a frame corresponds to an IP datagram and the packets correspond to ATM cells. The frame size (the number of packets in a frame) depends on the type of application using a transmission connection.

If one or more of the packets of a frame are missing at the destination, the frame cannot be reassembled and must be discarded. Therefore, if the performance of the network is evaluated from the point of view of the applications sending and receiving these higher level data units, it should be clear that the end-to-end delay and the loss rate of these data units (i.e. frames) are more relevant performance indicators than the end-to-end delay and the loss rate of individual data packets.

When random packet dropping policies are used in the network, it is more likely that the dropped packets belong to different frames than to the same frame. Therefore, the packet loss rate of such drop mechanisms cannot be an indication of the quality of service (QoS) on the application level.

To eliminate this drawback, more sophisticated loss mechanisms have been proposed. One is what is called the early packet discard (EPD) scheme, which discards whole frames instead of randomly discarding packets. The simplest way of implementing EPD is to set a threshold value in each buffer of the switch. The first packet of any incoming frame is discarded when the fill rate of the buffer exceeds the threshold value. Once the first packet of a frame is discarded, the remaining packets of the frame are also discarded, even if the fill rate has decreased to below the threshold. However, a packet is not discarded if the first packet of the same frame has been accepted, unless the entire buffer is full. The threshold value should be chosen in such a way that, on the one hand, no buffer overflow occurs and, on the other hand, no corrupted frames are transmitted.

For those interested in the subject, a detailed description of the EPD method can be found, for example, in an article by A. Romanow and S. Floyd, *Dynamics of TCP Traffic over ATM Networks,* Proc. ACM SIGCOMM '94, pp. 79-88, August 1994.

One drawback of the EPD method is that it deals unfairly with the different users. This is due to the fact that the EPD scheme discards complete frames from all connections, without taking into account their current rates or their relative shares in the buffer, i.e. without taking into account their relative contribution to an overload situation. To remedy this drawback, several variations for selective drop policies have been proposed.

Nevertheless, the EPD method and its variations still have the disadvantage of being restricted for use only in association with the buffers of the switch, the method becoming active only when the fill rate of a buffer exceeds the threshold.

The EPD method and its variations have been studied assuming that the switch is an output-buffered full speed switch, i.e. that the switch capacity equals to the dimension (number of output/input ports) of the switch. A further drawback relating to this type of switch is that the internal switching speed of the switch becomes high if the dimension of the switch is large. This in turn means that powerful (and expensive) chips must be used.

### Summary of the invention

The purpose of the invention is to eliminate the above-mentioned drawbacks and to create a new method which makes it possible to obtain a frame level performance equal to that of the above prior art methods by means of a less complex and less expensive switch structure, and without the need to control the fill rates of individual buffers.

This goal can be attained by using the solution defined in the independent patent claims.

According to the invention, a frame drop mechanism is introduced into a switch having a capacity smaller, preferably essentially smaller than the number of inputs and outputs of the switch. This is done so that the first packet of one or more frames is discarded if the number of packets simultaneously destined for the same port of the switch exceeds a predetermined value (the switch capacity). Once the first packet of a frame has been discarded, the remaining packets of the same frame are discarded when they access the switch, regardless of the current buffering capacity of the switch, i.e. the other packets of corrupted frames are prevented from entering the switching fabric.

In other words, the idea of the invention is to introduce a drop mechanism into the switching fabric so that the variable which controls the activation and deactivation of the drop mechanism indicates the number of packets simultaneously contending for the same port. This port can be an output port of the whole switch or any output port within the switching fabric. As the feature of several packets contending simultaneously for the same port relates only to output-buffered switches, the switch according to the invention must be an output-buffered switch.

By means of the solution according to the present invention, the implementation simplicity generally characteristic of input-queued switches, the good throughput performance generally characteristic of output-queued switches, and a low frame loss rate can be combined in a single switch more efficiently than before.

Implementation simplicity can be improved, as the internal switching speed of the switch according to the invention is not proportional to the dimension of the switch but to the capacity of the switch, which is smaller, preferably much smaller, than the dimension.

The switch according to the invention is preferably based on a knockout type structure, as this kind of structure can easily be modified to fulfill the functionality required by the invention.

### Brief description of the drawings

In the following, the invention and its preferred embodiments are described in closer detail with reference to examples shown in the appended drawings, wherein
- Figure 1: illustrates the relationship between packets and frames as used here,
- Figure 2: shows the general architecture of a Knockout switch,
- Figure 3: is a block diagram of a single output module of a Knockout switch,
- Figure 4: is a flow chart illustrating the steps of the method according to the invention,
- Figure 5: shows a preferred embodiment of the switch according to the present invention,
- Figures 6a to 6d: illustrate the states of an individual switching element of a prioritized Knockout concentrator,
- Figure 7: illustrates the classification of packets in the switch of Figure 5,
- Figure 8: illustrates one possible implementation of the acknowledgment distributor of Figure 5,
- Figure 9a...9d: illustrate the frame drop process in the switch according to the invention,
- Figure 10: illustrates a second preferred embodiment of the switch according to the invention,
- Figure 11: is a block diagram of an individual packet filter of Figure 10,
- Figure 12: is a flow chart illustrating the functions of an individual packet filter of Figure 10, and
- Figure 13: illustrates the routing of acknowledgments in the output module of Figure 10.

### Detailed description of the invention

As indicated above, the method according to the present invention is used in an output-buffered switch which switches fixed-length packets from N inputs to N outputs. In other words, the switch can be any packet switch suitable for switching fixed-length packets, such as an ATM switch. Further, the switch capacity L, which is defined as the maximum number of packets that can be transmitted simultaneously to one output port in one time slot, is smaller than N, i.e. L<N. A widely-known switch architecture fulfilling these prerequisites is the Knockout architecture. Therefore, the invention is described below by using the Knockout switch as an exemplary switch structure to which the invention is applied.

As known, the design of the Knockout switch is based on the knockout principle: if the arrivals of packets on N different input lines are statistically independent, the probability is extremely low that more than a handful of simultaneous packets, i.e. L packets (L<<N), are destined for any particular output port, even for arbitrarily large dimensions (NxN) of the switch.

The basic structure of the Knockout switch is illustrated in Figure 2. A packet arriving at one of N inputs is placed onto a broadcast bus from which it is transferred to each of the N output modules OMᵢ (i=1,2,..N). The output modules read the header of the packets, accepting those packets destined for that output and buffering those packets which cannot be immediately placed onto the output link, i.e. when two or more packets are contending simultaneously for the same output.

A block diagram of an output module OMᵢ is shown in Figure 3. Each of the input buses is connected to a packet filter PFᵢ (i=1,2,..N), i.e. there are N packet filters at the input of each output module. Each packet filter reads the header of the arriving packet and delivers it to a concentrator CC if the header indicates that the packet is intended for that output. Otherwise, the packet is ignored. Consequently, packets that appear at the outputs of the packet filters of a certain output module belong to the switch output being served by that particular output module.

The concentrator comprises N inputs but only L (L<N) outputs. In any time slot, the concentrator finds all active packets appearing at its inputs. If L or fewer packets are found, these packets are placed in the concentrator outputs, with the left-most outputs being filled first. On the other hand, if more than L packets arrive simultaneously (in the same time slot) at the concentrator, all but L of those packets will be lost. By properly choosing the value of L, the rate of loss resulting from this "built-in" packet loss mechanism can be maintained at an acceptable level. Thus, L represents the maximum number of packets that can be simultaneously transferred to a particular output port, i.e. L represents the switch capacity.

The outputs of the concentrator are connected to a shifter SH having L inputs and L outputs. As the concentrator fills its left-most outputs first, the left-most buffers would tend to fill up if the packets were connected directly from the concentrator to the L output buffers. The purpose of the shifter is to make sure that the L output buffers OBᵢ (i=1,2,...L) are filled as evenly as possible.

The output line OLᵢ connected to the outputs of the output buffers fetches packets cyclically from the output buffers; in time slot 1 the output line fetches a packet from buffer OB₁, in time slot 2 a packet from buffer OB₂, and so on. After the output line has fetched a packet from the last (L^{th}) buffer, the next packet is again fetched from the first buffer (OB₁).

As the Knockout switch is widely-known, an interested reader can find detailed descriptions from the many articles or books describing its architecture and functionality. The Knockout switch is also described in U.S. patent 4,760,570. Therefore, the features of the Knockout switch are not described in more detail here. Instead, the following description describes the modifications introduced to the Knockout architecture by the present invention.

According to the present invention, whole frames are discarded in the switch, instead of dropping packets randomly as is done in the Knockout switch. The frames are discarded in such a way that the switch begins to drop the first packet of one or more frames randomly, if the number of packets simultaneously destined for an output port exceeds the switch capacity L. The switch identifies the frames to which the discarded packets belong and continues to discard the other packets from those frames. This functionality is described in more detail in the following.

Whenever the number of incoming packets destined simultaneously for the same output port exceeds the switch capacity L, the switch begins to discard (knock out) the first packets of some of the incoming frames. Once a first packet of a certain frame is discarded (knocked out), the remaining packets of the same frame are also discarded when they access the switch, even if the switch would have enough buffering capacity to accept said packets. However, a packet is never discarded if the first packet of the same frame has already been accepted by the output port of the switch, unless the entire buffer in question is full.

To prevent the packets of corrupted frames from entering the switching fabric, each input port of the switch checks whether the packet leaving for the switch belongs to a corrupted frame, i.e. whether the first packet of the frame which the packet belongs to was discarded earlier in the switch fabric. Therefore, there are no packets entering the switching fabric that belong to a corrupted frame.

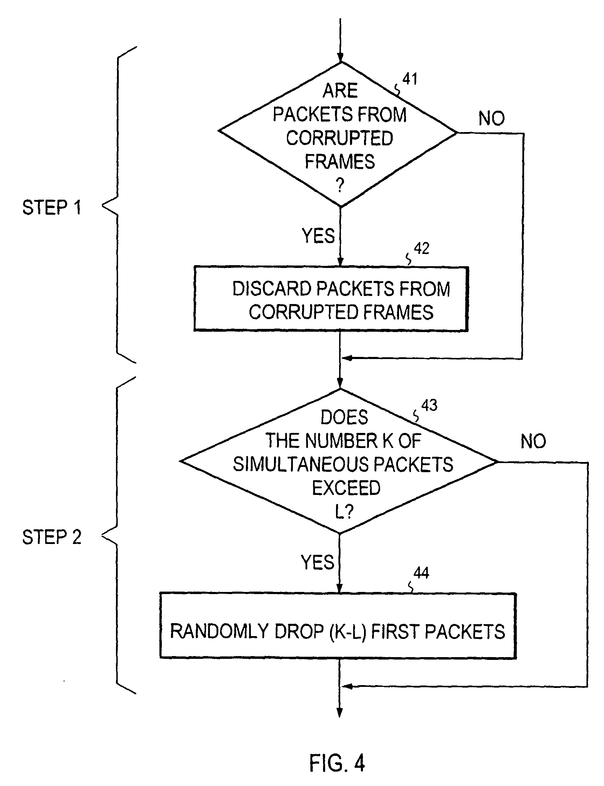

Figure 4 is a flow chart illustrating the basic principle of the invention. The switch continuously discards incoming packets which belong to corrupted frames (phases 41 and 42). Should the number K of packets simultaneously destined for an output port exceed the switch capacity L, the switch discards a certain number of first packets of frames (i.e. (K-L) packets) by choosing the first packets to be discarded randomly (phases 43 and 44). In other words, the (K-L) frames to be discarded are chosen randomly. As explained below, there are always at least (K-L) first packets in competition for a port when K is greater than L. In Figure 4, the drop process is divided into two consecutive steps, as these steps are performed in different parts of the switch.

In order to be able to check whether an incoming packet belongs to a corrupted frame, the input port of the switch must know if a previous packet of the same frame was accepted or discarded in the switching fabric. In other words, acknowledgments must be sent from the switching fabric to the input ports.

The above principle can be implemented in several ways. In the following, two preferred embodiments based on the Knockout switch are shown in more detail.

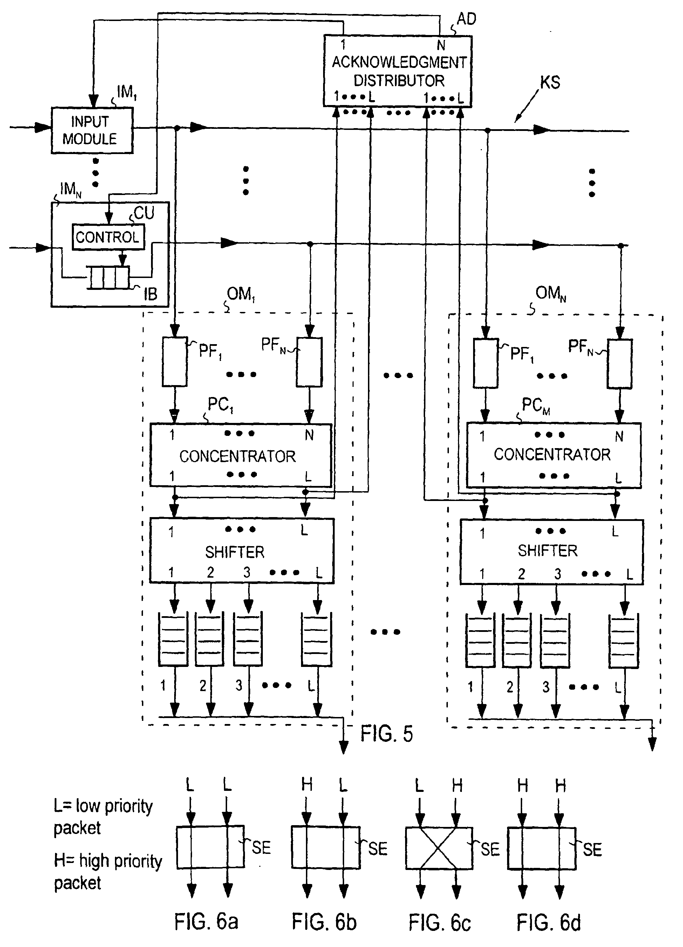

Figure 5 shows the first embodiment, comprising a Knockout switch KS, N input modules IMᵢ (i=1,2,...N), one for each input bus of the Knockout switch, and an acknowledgment distributor AD. In this embodiment the input modules perform step 1 of Figure 4, whereas the concentrators perform step 2.

The knockout switch KS of Figure 5 is otherwise similar to the commonly known Knockout switch, except that the concentrators PCᵢ (i=1,2,...N) drop first packets of frames, instead of dropping packets randomly. To achieve this, what are known as prioritized concentrators must be used, and the incoming packets must be divided into two classes in terms of loss probability, i.e. a high priority class and a low priority class. The division is done so that the incoming first packet of each frame is marked as a low priority packet and the remaining packets (i.e. those which are not the first packet in a frame) are marked as high priority packets (if not discarded before that).

The internal structure of a prioritized concentrator is similar to that of a common Knockout concentrator, except that the internal 2x2 switching elements function so that a high priority packet always wins the competition against a low priority packet. Therefore, a low priority packet is passed to the next level of competition only when no high priority packet is present at the inputs of a 2x2 switching element. If two high-priority packets are present at the inputs of a 2x2 switching element, the packet at the right input loses the competition.

Figures 6a to 6d illustrate the states of an individual switching element SE of a prioritized concentrator PCᵢ, assuming that a packet is present at both inputs.

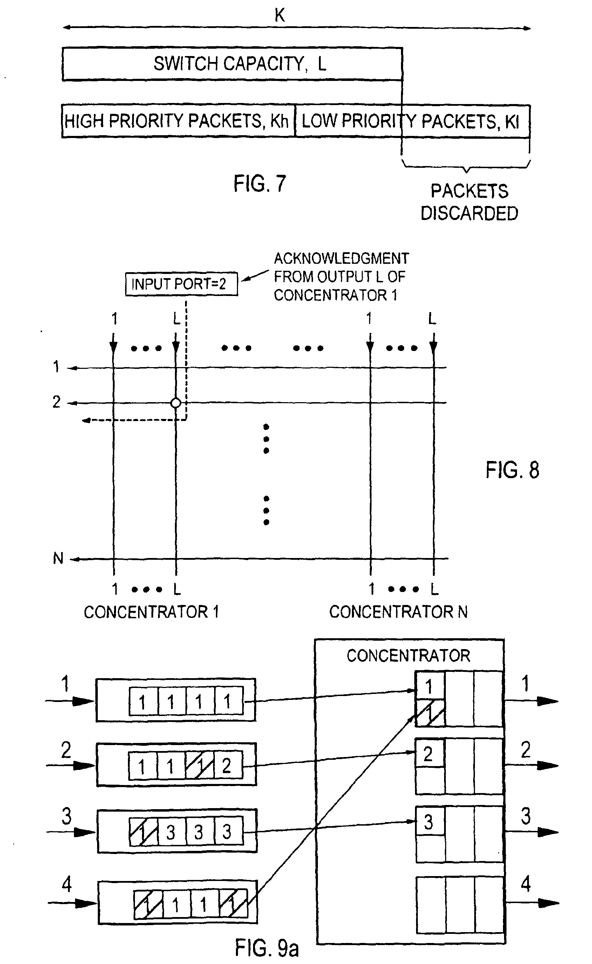

The classification of the packets is illustrated in Figure 7, where Kh represents the number of high-priority packets and KI the number of low-priority packets destined for a particular output in a single time slot. In the prioritized concentrators PCᵢ, (K-L) low priority packets are dropped if K>L.

It is to be noted that high priority packets will never be dropped in the concentrators because the number of contending high priority packets will never exceed L. This is because all other packets (which would be marked as high priority packets) of corrupted frames are not allowed to enter the switching fabric. This is also why there are always at least (K-L) first packets in the competition for an output if K is greater than L. This can be proved as follows:
If K>L, there are two alternatives depending on the value of Kh,
   (1) let us assume that Kh>L. This would mean that the number of packets accepted by the switching fabric in the previous time slot is greater than the switch capacity (as one output port of the switch can only accept up to L simultaneous packets). Therefore, this assumption is false.
   (2) let us assume that Kh ≤ L. Then KI = K-Kh ≥ K-L, i.e. there are at least (K-L) low priority packets (first packets) in competition for the output.

The acknowledgment distributor AD, which is common to all output modules, has NxL inputs and N outputs. The first L inputs are connected to the outputs of the concentrator of the first output module, the next L inputs to the outputs of the concentrator of the second output module, etc. If a packet passes through a concentrator PCᵢ, an acknowledgment is generated and sent through the distributor to the correct input module.

The acknowledgment distributor AD can be, for example, a simple crossbar matrix, as shown in Figure 8. There is only one connection in each row and column in the crossbar matrix in each time slot. Figure 8 shows how an acknowledgment is transferred if a packet from input module IM₂ is accepted by output module OM₁. It is assumed that the packet will emerge from the output L of the concentrator of said output module. An acknowledgment message will then be generated at said output, the message including, in addition to other data, the address of the input port from which the packet arrived (i.e. source address). On the basis of this source address, the switching element (marked with a circle in Figure 8) corresponding to the source address connects the message to the correct input module. It is thus to be noted that the self-routing tag attached to the packets (in the input modules) includes the addresses of both the input and the output ports.

In each time slot, each input module IMᵢ (i=1,2,...N) checks whether the packet leaving for the switch is the first packet of a frame. If this is the case, the input module marks the packet as a low priority packet and passes it to the switching fabric. If the packet is not a first packet of a frame, the input module checks, using the received acknowledgments, whether the previous packet belonging to the same connection was discarded in the switch. If the previous packet was discarded, the input module discards the packet, but if the previous packet was accepted, the input module marks the packet as a high-priority packet and passes it to the switching fabric.

As shown in association with input module IM_{N} in Figure 5, the above mentioned functionality can be implemented, for example, by means of a separate control unit CU which receives the acknowledgments, reads the header of the packet which is at the tip of the input buffer IB, and marks or discards said packet.

Figures 9a...9d illustrate an example of the frame drop process in the switch according to the invention. In this example, the switch has four inputs and four outputs, and the switch capacity L equals two. Low priority packets are shown as hatched, and the numbers inside the packets indicate the output port which is the destination of the packet.

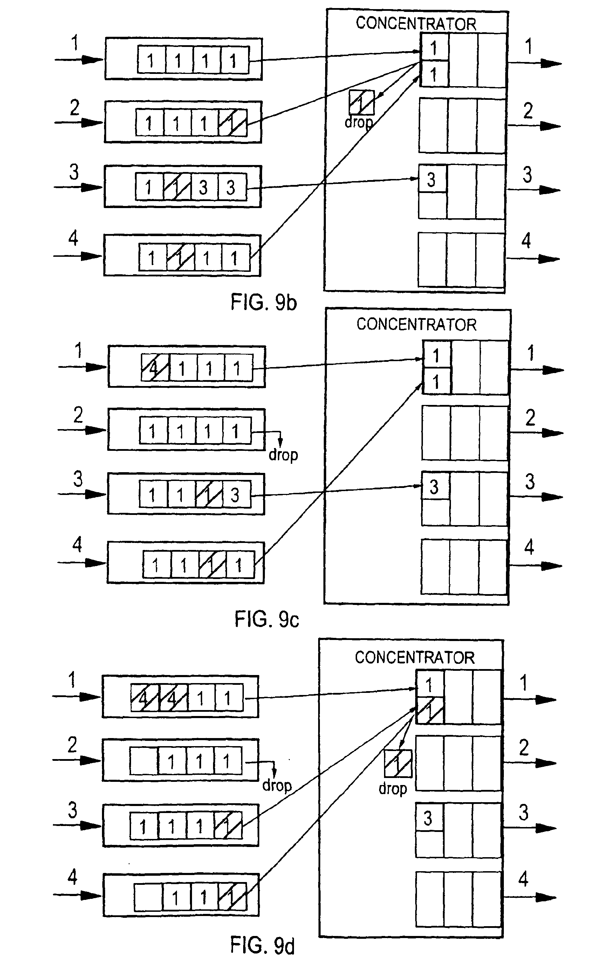

In time slot 1 (Figure 9a), the two packets destined for output 1 are accepted because L=2. In time slot 2 (Figure 9b), three packets are heading for output 1, so one of them must be discarded. In this case, the packet from input 2 is discarded in the concentrator, because it is the only low priority packet (first packet of a frame). The two other packets are accepted because they are not the first packet of a frame and because the preceding packets in the same frames were accepted. In time slot 3 (Figure 9c), the packet from input 2 is dropped at the input port 2 because the previous packet of the frame was dropped. In time slot 4 (Figure 9d), the packet from input 2 is again dropped, for the same reason. Nevertheless, there are still three packets destined for output 1. The packet from input 1 is accepted because it is a high priority packet, whereas one of the two first packets contending for output 1 is randomly dropped.

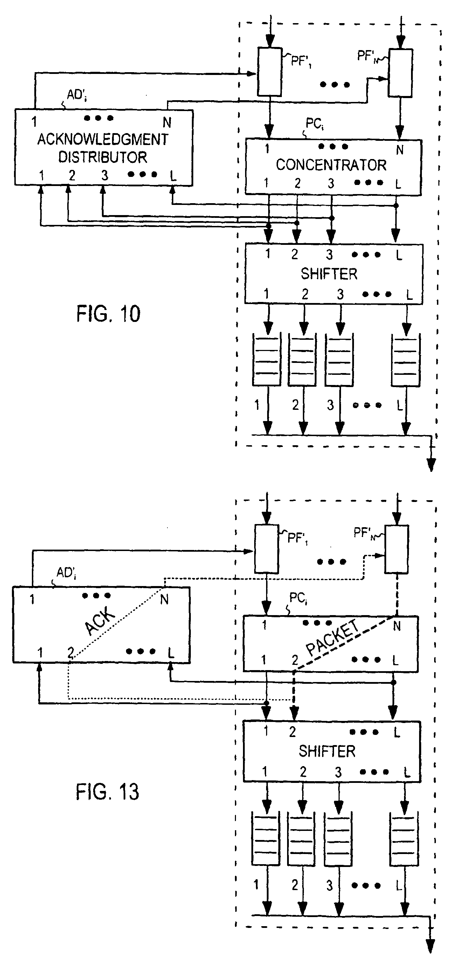

In the embodiment of Figure 5, the switch utilizes a large centralized acknowledgment distributor. Alternatively, the drop mechanism can be performed in the output modules only. This embodiment is illustrated in Figure 10, which shows one output module of such a switch. The overall structure of the switch is that shown in Figure 2. As shown in Figure 10, each output module comprises N packet filters PF'ᵢ (i=1,2,...,N), a prioritized concentrator PCᵢ with N inputs and L outputs, a shifter, L output buffers, and an acknowledgment distributor ADᵢ with L inputs and N outputs. In this case, the packet filters perform step 1 of Figure 4, whereas the prioritized concentrator performs step 2.

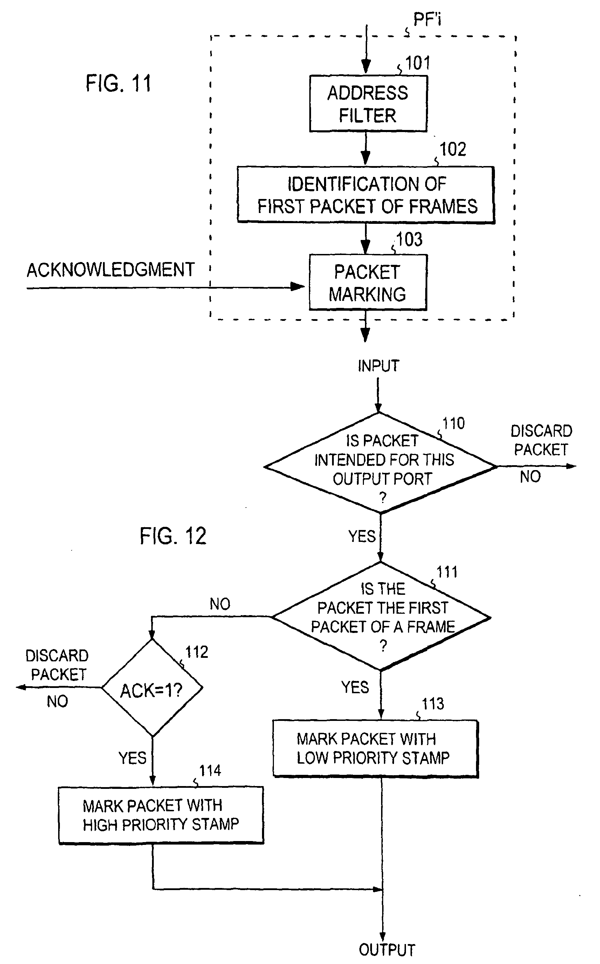

As the in the Knockout switch, the packet filters PF'ᵢ accept packets destined for that output and ignore the rest. However, as compared to the known packet filter of the Knockout switch, each packet filter PF'ᵢ has some additional features. Firstly, a packet filter prevents a packet from a corrupted frame from entering the concentrator. Secondly, a packet filter marks the first packet of frames as low priority packets and other packets as high priority packets. Figure 11 is a block diagram of an individual packet filter PF'ᵢ, and Figure 12 is a flow chart illustrating the functions of an individual packet filter. An address filter 101 reads the destination address of the incoming packet and checks whether the packet is destined for the output in question (phase 110). If this is the case, the packet is forwarded to an identification unit 102, which identifies the packets which are the first packet of frames (phase 111) by reading the headers of the incoming packets. For example, if the packets are ATM cells, the third bit of the PTI field of the cell header indicates whether the cell is the last cell segmented from a larger data unit.

Packets which are not first packets are transferred for a further check to a marking unit 103 (phase 112). In this further check the acknowledgment information on the previous packet of the same connection is checked. If the previous packet has been accepted, the packet is marked with a high priority stamp (phase 114) and supplied to the output of the packet filter. Otherwise, the output of the filter is not enabled, i.e. the packet is prevented from entering the concentrator (the packet is discarded). Packets identified as first packets bypass the acknowledgment check and are directly marked with a low priority stamp before being supplied to the output of the packet filter.

The following table describes the operation of the packet filter in various situations.

| **Input** | **Acknowledgment** | **Priority status/discard** | **Output** |
|---|---|---|---|
| first packet | 1 | low-priority | first-packet |
| first packet | 0 | low-priority | first packet |
| other packet | 1 | high-priority | other packet |
| other packet | 0 | discard | no packet |
| packet does not belong to the output, or no packet on the input | 1 | discard | no packet |
| packet does not belong to the output, or no packet on the input | 0 | discard | no packet |
| | 1: previous packet has been accepted 0: previous packet has been discarded or no packet has been accepted | | |

In the second embodiment of the switch (Figure 10), the prioritized concentrator operates in the same way as in the first embodiment (Figure 5), i.e. it performs step 2 of Figure 4.

In the second embodiment, the acknowledgment distributors are distributed to every output module. Each distributor ADᵢ can be a simple LxN crossbar network with inputs connected to the outputs of the concentrator and outputs connected to the packet filters. If a packet passes through the concentrator PCᵢ , an acknowledgment is generated and sent back through the distributor to the packet filter from which the packet came. Figure 13 illustrates an example of the acknowledgment feedback path. The route of the packet is shown by a thick dashed line and the route of the acknowledgment by a thin dashed line.

Although the invention has been described here in connection with the examples shown in the attached figures, it is clear that the invention is not limited to these examples, as it can be varied in several ways within the limits set by the attached patent claims. For example, the principle described above can also be applied to the individual switching elements of a multistage switching fabric. Depending on the basic structure of the switch to which the invention is applied, the switch may need a separate means for counting the number of simultaneously contending packets, i.e. the load level, so that the drop mechanism can be activated when the threshold is exceeded. However, a switch structure based on the knockout type switch is preferable in that no separate means are needed for measuring the load level. The switch can also have an additional drop mechanism which monitors the fill rates of the output buffers and drops packets from said buffers, i.e. the switch can have two superimposed drop mechanisms.

## Claims

1. A frame discard method for a packet switch, the method comprising the steps of
- receiving packets belonging to at least one transmission connection, consecutive packets of an individual transmission connection forming frames,
- switching packets from N input ports of the switch to N output ports of the switch, through at least one intermediate port,
- using a frame discard mechanism which discards complete frames, if the load level in the switch exceeds a predetermined threshold,
**characterized by**
using the frame discard mechanism in an output-buffered switch where the maximum number of packets that can be transmitted simultaneously to one port is smaller than N, in such a way that
when the number of packets simultaneously contending for an individual port exceeds said maximum number, at least one first packet of a frame is chosen to be discarded from among said packets, and
once a first packet of a frame has been discarded, the remaining packets of the same frame are also discarded, regardless of the current buffering capacity of the switch.

2. A method according to claim 1, **characterized in that** at least one first packet of a frame is chosen randomly from among packets which are the first packet of a frame.

3. A method according to claim 1, **characterized in that** the other packets belonging to a frame whose first packet has been switched through the switch are discarded only if the switch has no buffering capacity for said packets.

4. A method according to claim 1, **characterized in that** the packets received are classified as high and low priority packets and supplied to a Knockout switch comprising Knockout concentrators in which packets compete pairwise in such a way that the high priority packet wins the low priority packet whenever high and low priority packets compete against each other.

5. A method according to claim 1, **characterized in that** said remaining packets are discarded at the input edge of the switch to prevent them from entering the switch.

6. An output-buffered packet switch for switching packets, the switch comprising N input ports, N output ports, and at least one intermediate port between the input ports and the output ports, whereby the maximum number of packets that can be transmitted simultaneously to one port of the switch is smaller than N,
**characterized in that**
the switch further comprises
first means (IMᵢ, PC₁...PC_{N}; PF'₁...PF'_{N}, PCᵢ) for discarding at least one first packet of a frame when the number of packets simultaneously destined for an individual port exceeds said maximum number, and
second means (AD, IMᵢ; ADᵢ, PF'₁...PF'_{N}) for discarding the remaining packets of a frame, if the first packet of the same frame has been discarded.

7. A packet switch according to claim 6, **characterized in that** said first means comprise
classification means for dividing the packets received into low and high priority packets, and
Knockout concentrators (PC₁...PC_{N}; PCᵢ) comprising elements (SE) in which packets compete pairwise in such a way that a high priority packet always wins over a low priority packet when said packets compete against each other.

8. A packet switch according to claim 7, **characterized in that** it comprises
N parallel buses and N output modules, each output module being connected to each of the buses and including a Knockout concentrator, and
N input modules, each being connected to one of the input buses and each comprising said classifying means.

9. A packet switch according to claim 8, **characterized in that** the second means comprise a centralized distributor connected to the outputs of the Knockout concentrator of each output module for routing acknowledgments from each concentrator to the input modules, said acknowledgments containing information on packets having passed the concentrators.

10. A packet switch according to claim 9, **characterized in that** the centralized distributor is a crossbar matrix.

11. A packet switch according to claim 7, **characterized in that** the switch is a Knockout type switch comprising
N parallel buses and
N output modules, each comprising
N packet filters, each having an input and an output, the input of each filter being connected to one of the buses, and each filter comprising said classifying means (103),
one Knockout concentrator having N inputs and L outputs, each of the inputs being connected to the output of one of the packet filters, and
a distributor (ADᵢ) connected to the outputs of the concentrator for routing acknowledgments from the concentrator to the packet filters, said acknowledgments containing information on packets which have passed the concentrator.

12. A packet switch according to claim 11, **characterized in that** the distributor is a crossbar matrix.

## Patentansprüche

1. Rahmenverwerfungsverfahren für einen Paketvermittlungsknoten, mit den Schritten:
Empfangen von Paketen, die zu zumindest einer Übertragungsverbindung gehören, wobei aufeinander folgende Pakete einer einzelnen Übertragungsverbindung Rahmen bilden,
Vermitteln von Paketen von N Eingangsports des Vermittlungsknotens über zumindest einen Zwischenport zu N Ausgangsports des Vermittlungsknotens,
Anwenden eines Rahmenverwerfungsmechanismus, der komplette Rahmen verwirft, falls der Lastpegel in dem Vermittlungsknoten einen vorbestimmten Schwellwert überschreitet,
**gekennzeichnet durch**
Anwendung des Rahmenverwerfungsmechanismus in einem ausgangsgepufferten Vermittlungsknoten, bei dem die maximale Anzahl von Paketen, die gleichzeitig an einen Port übertragen werden können, kleiner ist als N, auf solche Weise, dass
zumindest ein erstes Paket eines Rahmens aus den Paketen ausgewählt wird, verworfen zu werden, wenn die Anzahl von Paketen, die gleichzeitig um einen einzelnen Port wettstreiten, die maximale Anzahl überschreitet, und
die verbleibenden Pakete des gleichen Rahmens ohne Rücksicht auf die aktuelle Pufferkapazität des Vermittlungsknotens ebenfalls verworfen werden, sobald ein erstes Paket eines Rahmens verworfen wurde.

2. Verfahren gemäß Anspruch 1, **dadurch gekennzeichnet, dass** zumindest ein erstes Paket eines Rahmens zufällig aus Paketen ausgewählt wird, die das erste Paket eines Rahmens sind.

3. Verfahren gemäß Anspruch 1, **dadurch gekennzeichnet, dass** die anderen Pakete, die zu einem Rahmen gehören, dessen erstes Paket über den Vermittlungsknoten vermittelt wurde, nur dann verworfen werden, wenn der Vermittlungsknoten keine Pufferkapazität für diese Pakete aufweist.

4. Verfahren gemäß Anspruch 1, **dadurch gekennzeichnet, dass** die empfangenen Pakete als Pakete hoher und niedriger Priorität klassifiziert und an einen Knockoutvermittler geliefert werden, der Knockoutkonzentratoren aufweist, in denen Pakete derart paarweise konkurrieren, dass das Paket hoher Priorität gegen das Paket niedriger Priorität gewinnt, wann immer Pakete hoher und niedriger Priorität gegeneinander konkurrieren.

5. Verfahren gemäß Anspruch 1, **dadurch gekennzeichnet, dass** die verbleibenden Pakete an der Eingangsseite des Vermittlungsknotens verworfen werden, um zu verhindern, dass sie in den Vermittlungsknoten eintreten.

6. Ausgangsgepufferter Paketvermittlungsknoten zum Vermitteln von Paketen, wobei der Vermittlungsknoten N Eingangsports, N Ausgangsports und zumindest einen Zwischenport zwischen den Eingangsports und den Ausgangsports aufweist, wobei die maximale Anzahl von Paketen, die gleichzeitig an einen Port des Vermittlungsknotens übertragen werden können, kleiner ist als N,
**dadurch gekennzeichnet, dass**
der Vermittlungsknoten zusätzlich aufweist:
erste Einrichtungen (IMᵢ, PC₁ ... PC_{N}; PF'₁ ... PF'_{N}, PCᵢ) zum Verwerfen von zumindest einem ersten Paket eines Rahmens, wenn die Anzahl von Paketen, die gleichzeitig für einen einzelnen Port bestimmt sind, die maximale Anzahl überschreitet, und
zweite Einrichtungen (AD, IMᵢ; ADᵢ, PF'₁ ... PF'_{N}) zum Verwerfen der verbleibenden Pakete eines Rahmens, falls das erste Paket des gleichen Rahmens verworfen wurde.

7. Paketvermittlungsknoten gemäß Anspruch 6, **dadurch gekennzeichnet, dass** die ersten Einrichtungen aufweisen:
Klassifikationseinrichtungen zum Unterteilen der empfangenen Pakete in Pakete niedriger und hoher Priorität, und
Knockoutkonzentratoren (PC₁ ... PC_{N}; PCᵢ) mit Elementen (SE), in denen Pakete derart paarweise konkurrieren, dass ein Paket hoher Priorität immer gegen ein Paket niedriger Priorität gewinnt, wenn die Pakete gegeneinander konkurrieren.

8. Paketvermittlungsknoten gemäß Anspruch 7, **dadurch gekennzeichnet, dass** er aufweist:
N parallele Busse und N Ausgangsmodule, wobei jedes Ausgangsmodul mit jedem der Busse verbunden ist und einen Knockoutkonzentrator umfasst, und
N Eingangsmodule, die jeweils mit einem der Eingangsbusse verbunden sind und jeweils die Klassifikationseinrichtungen aufweisen.

9. Paketvermittlungsknoten gemäß Anspruch 8, **dadurch gekennzeichnet, dass** die zweiten Einrichtungen einen zentralisierten Verteiler, der mit den Ausgängen des Knockoutkonzentrators von jedem Ausgangsmodul verbunden ist, zur Leitweglenkung von Bestätigungen von jedem Konzentrator an die Eingangsmodule aufweisen, wobei die Bestätigungen Informationen über Pakete enthalten, die die Konzentratoren passiert haben.

10. Paketvermittlungsknoten gemäß Anspruch 9, **dadurch gekennzeichnet, dass** der zentralisierte Verteiler eine Kreuzschienenmatrix ist.

11. Paketvermittlungsknoten gemäß Anspruch 7, **dadurch gekennzeichnet, dass** der Vermittlungsknoten ein Knockouttyp-Vermittlungsknoten ist, der aufweist:
N parallele Busse, und
N Ausgangsmodule, die jeweils aufweisen:
N Paketfilter, die jeweils einen Eingang und einen Ausgang aufweisen, wobei der Eingang von jedem Filter mit einem der Busse verbunden ist und jeder Filter die Klassifikationseinrichtung (103) aufweist,
einen Knockoutkonzentrator mit N Eingängen und L Ausgängen, wobei jeder der Eingänge mit dem Ausgang von einem der Paketfilter verbunden ist, und
einen Verteiler (ADᵢ), der mit den Ausgängen des Konzentrators verbunden ist, zur Leitweglenkung von Bestätigungen von dem Konzentrator an die Paketfilter, wobei die Bestätigungen Informationen über Pakete enthalten, die den Konzentrator passiert haben.

12. Paketvermittlungsknoten gemäß Anspruch 11, **dadurch gekennzeichnet, dass** der Verteiler eine Kreuzschienenmatrix ist.

## Revendications

1. Procédé pour abandonner des trames pour un commutateur par paquets, le procédé comprenant les étapes consistant à :
recevoir des paquets appartenant à au moins une connexion de transmission, des paquets consécutifs d'une connexion de transmission individuelle formant des trames,
commuter des paquets depuis N ports d'entrée du commutateur vers N ports de sortie du commutateur, à travers au moins un port intermédiaire,
utiliser un mécanisme d'abandon de trames qui abandonne des trames complètes si le niveau de charge dans le commutateur dépasse un seuil prédéterminé,
**caractérisé par**
une utilisation du mécanisme d'abandon de trames dans un commutateur à sortie à mémoire tampon dans lequel le nombre maximum de paquets qui peuvent être transmis simultanément vers un port est plus petit que N, de telle manière que
lorsque le nombre de paquets se disputant simultanément un port individuel dépasse ledit nombre maximum, au moins un premier paquet d'une trame est choisi pour être abandonné desdits autres paquets, et
une fois qu'un premier paquet d'une trame a été abandonné, les paquets restants de la même trame sont également abandonnés, quelle que soit la capacité de mise en mémoire tampon courante du commutateur.

2. Procédé selon la revendication 1, **caractérisé en ce que** au moins un premier paquet d'une trame est choisi de manière aléatoire parmi des paquets qui sont le premier paquet d'une trame.

3. Procédé selon la revendication 1, **caractérisé en ce que** les autres paquets appartenant à une trame, dont le premier paquet a été commuté à travers le commutateur, sont abandonnés uniquement si le commutateur n'a pas de capacité de mise en mémoire tampon pour lesdits paquets.

4. Procédé selon la revendication 1, **caractérisé en ce que** les paquets reçus sont classés en paquets à priorité élevée et priorité basse et délivrés vers un commutateur Knockout comprenant des concentrateurs Knockout, dans lesquels des paquets rivalisent par paire, de telle manière que le paquet ayant la priorité élevée l'emporte sur le paquet ayant la priorité basse à chaque fois que des paquets à priorité élevée et à priorité basse rivalisent l'un contre l'autre.

5. Procédé selon la revendication 1, **caractérisé en ce que** lesdits paquets restants sont abandonnés au niveau du bord d'entrée du commutateur de manière à les empêcher d'entrer dans le commutateur.

6. Commutateur de paquets à sortie à mémoire tampon pour commuter des paquets, le commutateur comprenant N ports d'entrée, N ports de sortie et au moins un port intermédiaire entre les ports d'entrée et les ports de sortie, par lequel le nombre maximum de paquets qui peuvent être transmis simultanément vers un port du commutateur est plus petit que N,
**caractérisé en ce que**
le commutateur comprend en outre
des premiers moyens (IMᵢ, PC₁ ... PC_{N} ; PF'₁ ...PF'_{N}, PCᵢ) pour abandonner au moins un premier paquet d'une trame lorsque le nombre de paquets simultanément destinés à un port individuel dépasse ledit nombre maximum, et
des seconds moyens (AD, IMᵢ, ADᵢ, PF'₁...PF'_{N}) pour abandonner les paquets restants d'une trame, si le premier paquet de la même trame a été abandonné.

7. Commutateur de paquets selon la revendication 6, **caractérisé en ce que** lesdits premiers moyens comprennent
des moyens de classification pour diviser les paquets reçus en paquets à priorité élevée et paquets à priorité basse, et
des concentrateurs Knockout (PCᵢ ... PC_{N} ; PCᵢ) comprenant des éléments (SE) dans lesquels des paquets rivalisent par paire de telle manière qu'un paquet ayant une priorité élevée l'emporte toujours sur un paquet ayant une priorité basse lorsque lesdits paquets rivalisent l'un contre l'autre.

8. Commutateur de paquets selon la revendication 7, **caractérisé en ce qu'**il comprend
N bus parallèles et N modules de sortie, chaque module de sortie étant connecté à chacun des bus et comprenant un concentrateur Knockout, et
N modules d'entrée, chacun étant connecté à un des bus d'entrée et chacun comprenant lesdits moyens de classification.

9. Commutateur de paquets selon la revendication 8, **caractérisé en ce que** les seconds moyens comprennent un distributeur centralisé connecté aux sorties du concentrateur Knockout de chaque module de sortie pour router des accusés de réception depuis chaque concentrateur vers les modules d'entrée, lesdits accusés de réception contenant des informations sur les paquets ayant passé les concentrateurs.

10. Commutateur de paquets selon la revendication 9, **caractérisé en ce que** le distributeur centralisé est une matrice carrée.

11. Commutateur de paquets selon la revendication 7, **caractérisé en ce que** le commutateur est un commutateur Knockout comprenant
N bus parallèles et
N modules de sortie, chacun comprenant
N filtres de paquets, chacun ayant une entrée et une sortie, l'entrée de chaque filtre étant connectée à un des bus, et chaque filtre comprenant lesdits moyens de classification (103),
un concentrateur Knockout ayant N entrées et L sorties, chacune des entrées étant connectée à la sortie d'un des filtres de paquets, et
un distributeur (ADᵢ) connecté aux sorties du concentrateur pour router des accusés de réception depuis le concentrateur vers les filtres de paquets, lesdits accusés de réception contenant des informations sur les paquets qui ont passé le concentrateur.

12. Commutateur de paquets selon la revendication 11, **caractérisé en ce que** le distributeur est une matrice carrée.
